# EUROPEAN PATENT APPLICATION

(11) **EP 4 395 417 A1**
(43) Date of publication of application: **03.07.2024**
(21) Application number: 22217384.1
(22) Date of filing: 30.12.2022
(51) Int. Cl.: H04W 40/02, H04L 45/00, H04B 7/15

(54) **COMMUNICATION METHOD FOR A WIRELESS AD HOC NETWORK, AND WIRELESS AD HOC NETWORK**

(71) Applicant: Rohde & Schwarz GmbH & Co. KG, 81671 München (DE)
(72) Inventor: Baessler, Andreas, 81671 München (DE)
(74) Representative: Prinz & Partner mbB

(57) **Abstract**

A communication method for a wireless ad hoc network (10) is described. The wireless ad hoc network (10) comprises a plurality of nodes (12), wherein the wireless ad hoc network (10) is a time-slotted barrage relay network. The communication method comprising the following steps:
- transmitting (S1), by means of each node (12) of the plurality of nodes (12), at least one initial data package to each of the remaining nodes (12), respectively;
- receiving (S2), by means of each node (12) of the plurality of nodes (12), the initial data packages from the remaining nodes of the plurality of nodes (12), respectively;
- determining (S3), by means of each node (12) of the plurality of nodes (12), a node-specific maximum transmission distance based on the received initial data packages; and
- including (S4), by means of each node (12) of the plurality of nodes (12), the respective node-specific maximum transmission distance into subsequently transmitted data packages.

Further, a wireless ad hoc network (10) is described.

## Description

The invention generally relates to a communication method for a wireless ad hoc network. The invention further relates to a wireless ad hoc network.

In the state of the art, mobile or rather wireless networks such as mobile ad hoc networks (MANET) are known that comprise several nodes that communicate with each other. These networks typically comprise several nodes or rather participants that communicate with each other in order to exchange data packets. The data packets are exchanged between the nodes that all have a dedicated address. This ensures that the communication among these nodes is structured since each node has its own address. However, the addressing is complicated since mobile ad-hoc networks are dynamic in nature, which means that the nodes will enter or leave the network randomly so that (re-)addressing of the nodes is required.

Due to the highly dynamic nature of MANETs, the number of hops required to distribute data to each node of the MANET may vary. Usually, MANETs are configured with a preset amount of hops, such that it is ensured that the data to be distributed reaches every node of the MANET. Accordingly, after sending data, each node waits for a time span corresponding to the preset amount of hops before transmitting data again.

This may result in a suboptimal configuration of the MANET, as the preset amount of hops may be too large or too small depending on the topology of the MANET.

Thus, the object of the present invention is to provide a communication method that allows for an optimized configuration of a wireless ad hoc network.

According to the present invention, the problem is solved by a communication method for a wireless ad hoc network. The wireless ad hoc network comprises a plurality of nodes, wherein the wireless ad hoc network is a time-slotted barrage relay network. The communication method comprises the following steps:
- transmitting, by means of each node of the plurality of nodes, at least one initial data package to each of the remaining nodes, respectively;
- receiving, by means of each node of the plurality of nodes, the initial data packages from the remaining nodes of the plurality of nodes, respectively;
- determining, by means of each node of the plurality of nodes, a node-specific maximum transmission distance based on the received initial data packages; and
- including, by means of each node of the plurality of nodes, the respective node-specific maximum transmission distance into subsequently transmitted data packages.

Therein, each node may receive the initial data packages either directly if the respective packages are transmitted by neighboring nodes (i.e. by a 1-hop neighbor) and/or indirectly if the respective packages are transmitted by nonneighboring nodes (i.e. by 2-hop neighbors, 3-hop neighbors, etc.).

According to the present invention, each node determines the corresponding node-specific maximum transmission distance, which corresponds to the maximum number of hops that have been necessary in order to transmit the initial data package to the respective node.

This information, i.e. the maximum number of hops necessary to reach the respective node, is included into packages subsequently transmitted by means of the respective node.

Accordingly, the node-specific maximum transmission distances are distributed or rather broadcast to all nodes of the wireless ad hoc network. This enables the nodes to adapt the maximum amount of hops of packages transmitted within the wireless ad hoc network, such that an optimized configuration of the wireless ad hoc network is obtained.

According to an aspect of the present invention, a global maximum transmission distance is determined by means of the nodes, respectively, wherein the global maximum transmission distance is equal to the largest node-specific maximum transmission distance. In other words, the global maximum transmission distance corresponds to the maximum amount of hops that occur within the entire wireless ad hoc network in order to transmit a single data package from one node to another node. This information enables the nodes to optimally adapt the maximum amount of hops of packages transmitted within the wireless ad hoc network, such that a particularly optimal configuration of the wireless ad hoc network is obtained.

In an embodiment of the present invention, the global maximum transmission distance is determined based on the subsequently transmitted data packages. As mentioned above, the node-specific maximum transmission distances are included in the subsequently transmitted data packages that are broadcast to the nodes of the wireless ad hoc network. Accordingly, every node has access to the information regarding the node-specific maximum transmission distances of all nodes after the subsequently transmitted data packages have been broadcast to the plurality of nodes. The nodes may each compare the different node-specific maximum transmission distances associated with different nodes in order to determine the global maximum transmission distance.

According to another aspect of the present invention, the global maximum transmission distance is included into subsequently transmitted data packages. Thus, the global maximum transmission distance is broadcast to all nodes of the wireless ad hoc network. For example, if a new node connects to the wireless ad hoc network, the new node may receive the global maximum transmission distance determined by the other nodes, and may perform an initial configuration of its transmission parameters based on the global maximum transmission distance.

Particularly, a time to live (TTL) of each of the nodes is reduced to the global maximum transmission distance or to the global maximum transmission distance plus one, wherein the TTL corresponds to the maximum allowable number of hops of a package sent by the respective node. By reducing the TTL to the global maximum transmission distance, it is ensured that each node of the current wireless ad hoc network can be reached by any other node of the current wireless ad hoc network. By reducing the TTL to the global maximum transmission distance plus 1, a safety margin is provided, such that all nodes of the wireless ad hoc network can be reached by all other nodes even if a new node connects to the wireless ad hoc network.

Of course, other safety margins are also possible. For example, the TTL may be reduced to the global maximum transmission distance plus 2, to the global maximum transmission distance plus 3, etc.

In a further embodiment of the present invention, the initial data packages comprise a remaining hop count portion, respectively, wherein the remaining hop count portion comprises information on a remaining hop count of the respective package, and wherein a value of the remaining hop count is decreased at each hop by means of the respective node. More precisely, the value of the remaining hop count is decreased by one at each hop. If the remaining hop count reaches a predefined value, particularly zero, the respective package is not forwarded to any further nodes. The remaining hop count can be transmitted efficiently, as the corresponding sequence of the transmitted data package usually only has to be a few bits long, e.g. 2, 3, or 4 bits.

It is to be understood that the subsequently transmitted data packages may also comprise a remaining hop count portion, respectively. The remaining hop count portion comprises information on a remaining hop count of the respective subsequently transmitted data package, wherein a value of the remaining hop count is decreased at each hop by means of the respective node. The explanations given above with respect to the initial data packages likewise apply to the subsequently transmitted data packages.

A further aspect of the present invention provides that the plurality of nodes is configured to communicate with each other by means of a time division multiple access (TDMA) technique. Accordingly, certain time slots for receiving and/or transmitting data packages may be assigned to the plurality of nodes, particularly to each node of the plurality of nodes.

Particularly, TDMA frames comprise time slots that are unambiguously assigned to one of the nodes, respectively. In other words, data packages being transmitted during a time slot being assigned to a specific node are unambiguously linked to that specific node.

For example, each TDMA frame comprises a predefined time slot that is unambiguously associated with a first node of the plurality of nodes. During the predefined time slot of a first TDMA frame, the first node transmits a data package to at least one second node. During the predefined time slot of a second TDMA frame, the at least one second node forwards the data package originally transmitted by the first node to at least one third node, etc.

Particularly, the initial data packages and/or the subsequently transmitted data packages comprise management data associated with the respective node. In general, the management data comprises information that is relevant for configuring the wireless ad hoc network. The management data may be transmitted together with the remaining hop count portion, the node-specific maximum transmission distance, and/or the global maximum transmission distance.

The management data may comprise configuration information and/or location information associated with the respective node. Accordingly, the configuration information and/or the location information associated with the respective node may be transmitted together with the remaining hop count portion, the node-specific maximum transmission distance, and/or the global maximum transmission distance.

According to the present invention, the problem further is solved by means of a wireless ad hoc network. The wireless ad hoc network comprising a plurality of nodes. The wireless ad hoc network is a time-slotted barrage relay network. The wireless ad hoc network is configured to perform the communication method described above.

Regarding the further advantages and properties of the wireless ad hoc network, reference is made to the explanations given above with respect to the communication method, which also hold for the wireless ad hoc network and vice versa.

The foregoing aspects and many of the attendant advantages of the claimed subject matter will become more readily appreciated as the same become better understood by reference to the following detailed description, when taken in conjunction with the accompanying drawings, wherein:
- Figure 1 schematically shows a wireless ad hoc network according to the present invention;
- Figure 2 shows a flow chart of a communication method according to the present invention;
- Figure 3 schematically shows frames transmitted by nodes of the wireless ad hoc network of Figure 1 before optimization;
- Figure 4 schematically shows the structure of a data package; and
- Figure 5 schematically shows frames transmitted by nodes of the wireless ad hoc network of Figure 1 after optimization.

The detailed description set forth below in connection with the appended drawings, where like numerals reference like elements, is intended as a description of various embodiments of the disclosed subject matter and is not intended to represent the only embodiments. Each embodiment described in this disclosure is provided merely as an example or illustration and should not be construed as preferred or advantageous over other embodiments. The illustrative examples provided herein are not intended to be exhaustive or to limit the claimed subject matter to the precise forms disclosed.

For the purposes of the present disclosure, the phrase "at least one of A, B, and C", for example, means (A), (B), (C), (A and B), (A and C), (B and C), or (A, B, and C), including all further possible permutations when more than three elements are listed. In other words, the term "at least one of A and B" generally means "A and/or B", namely "A" alone, "B" alone or "A and B".

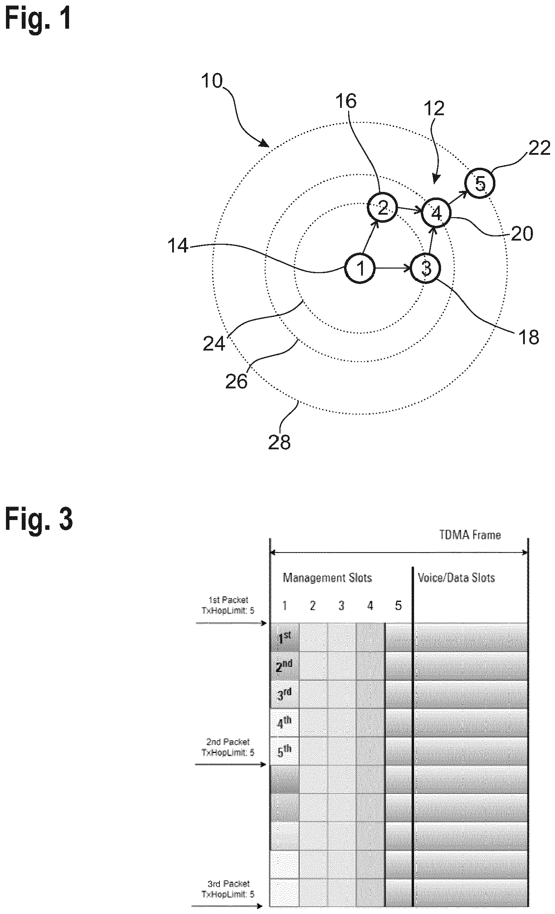

Figure 1 schematically shows a wireless ad hoc network 10 comprising a plurality of nodes 12, wherein the wireless ad hoc network 10 is established as a time-slotted barrage relay network.

In general, the nodes 12 are configured to communicate with each other by means of a wireless communication technique, namely by means of a time-division multiple access (TDMA) technique.

The individual nodes 12 may be established as any electronic device being capable of TDMA communication, respectively.

For example, the nodes 12 may be established as a smart phone, as a handheld radio, as a stationary radio, as a laptop, as a desktop computer, or as any other suitable type of smart device, respectively.

In Figure 1, the wireless ad hoc network 10 is shown from the viewpoint of a first node 14 of the plurality of nodes 12. It is to be understood that this is for illustration purposes only, i.e. the wireless may likewise be described from the viewpoint of any other node 12.

In the exemplary embodiment shown in Figure 1, the first node 14 comprises two 1-hop neighbors, namely a second node 16 and a third node 18.

The first node 14 further comprises one 2-hop neighbor, namely a fourth node 20, and one 3-hop neighbor, namely a fifth node 22.

It is to be understood that the first node 14 may comprise an arbitrary number of 1-hop neighbors 24, 2-hop neighbors 26, 3-hop neighbors 28, etc., as is indicated by the dotted circles in Figure 1.

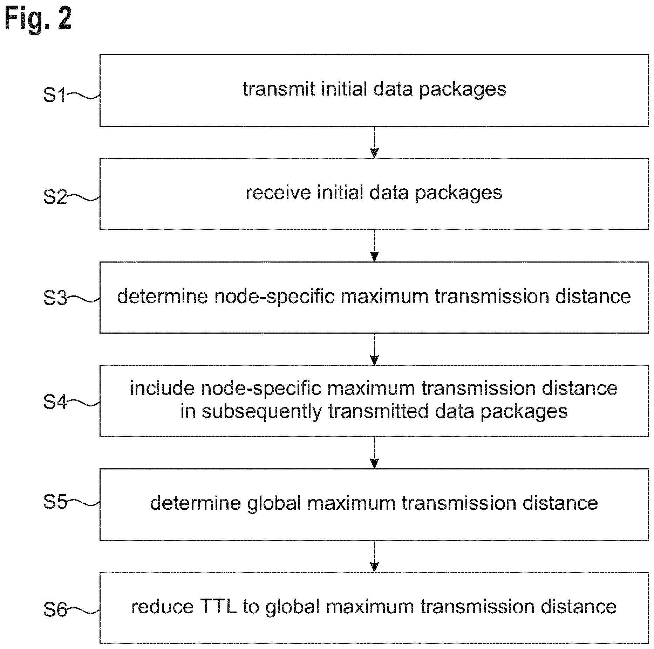

The wireless ad hoc network 10 is configured to perform a communication method that is described in the following with reference to Figure 2.

It is noted that the communication method is described hereinafter with respect to data packages transmitted and received by the first node 14, the second node 16, the third node 18, the fourth node 20, and the fifth node 22. It is to be understood that the communication method likewise applies to an arbitrary other number of nodes 12 as well as to an arbitrary other topology of the wireless ad hoc network 10.

At least one initial data package is transmitted by each node 12 to each other node 12 (step S1).

Accordingly, at least one initial data package is transmitted from the first node 14 to the second to fifth nodes 16, 18, 20, 22, respectively.

This is further illustrated in Figure 3, which shows TDMA frames that are used for transmitting the data packages in an initial (non-optimized) configuration of the wireless ad hoc network 10.

In fact, a predefined time slot of each TDMA frame is unambiguously assigned to each node 12 of the plurality of nodes 12. These time slots are denoted as "Management Slots" in Figure 3.

In the example shown in Figure 3, the first time slot is assigned to the first node 14, such that all data packages associated with the first node 14 are transmitted during the first "Management Slot".

In fact, during the first time slot of the first TDMA frame ("1^{st}" in Figure 3), the first node 14 transmits at least one initial data package to the second node 16 and to the third node 18, respectively.

During the first time slot of the second TDMA frame ("2^{nd}" in Figure 3), the second node 16 and the third node 18 forward the at least one initial data package received from the first node 14 to the fourth node 20, respectively.

During the first time slot of the third TDMA frame ("3^{rd}" in Figure 3), the fourth node 20 forwards the at least one initial data package associated with the first node 14 to the fifth node 22.

As the at least one initial data package received from the second node 16 and the third node 18 during the first time slot are identical, the fourth node 20 may discard the at least one initial data package received from either the second node 16 or the third node 18.

As there are no 4-hop neighbors in the exemplary topology of the wireless ad hoc network shown in Figure 1, the fifth node 22 does not forward the at least one initial data package associated with the first node 14 any further.

Accordingly, there is no transmission of the at least one initial data package associated with the first node 14 during the first time slot of the fourth TDMA frame ("4^{th}" in Figure 3) and during the first time slot of the fifth TDMA frame ("5^{th}" in Figure 3).

The TDMA frames may further comprise data transmission time slots for transmitting payload data ("Voice/Data Slots" in Figure 3).

In general, the payload data may correspond to image data, video data, audio data, language data, and/or arbitrary other types of data.

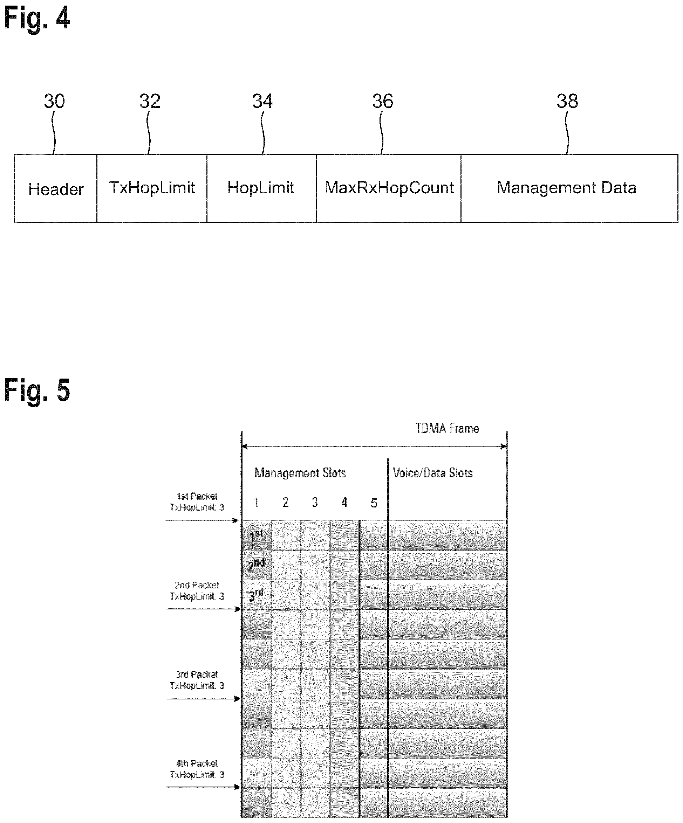

Figure 4 schematically shows an initial data package transmitted during the first time slot.

The data package comprises a header 30, a time to live (TTL) portion 32, a remaining hop count portion 34, a node-specific maximum transmission distance portion 36, and a management data portion 38.

The header 30 may be configured as in usual wireless ad hoc networks. For example, the header 30 may comprise the address of a target node 12 for the respective data package.

The TTL portion 32 comprises a TTL of data packages transmitted by the first node 14, i.e. a maximum hop count that is allowable for data packages transmitted by the first node 14.

In the example shown in Figure 3, the TTL of packages transmitted by the first node 14 is five, i.e. the TTL portion 32 comprises the information "TTL=5".

The remaining hop count portion 34 comprises information on a remaining hop count of the respective package.

When the first node 14 transmits the at least one initial data package, the value of the remaining hop count portion 34 is equal to the TTL. Accordingly, the remaining hop count portion 34 of the at least one initial data package transmitted by the first node 14 comprises the information "remaining hop count = 5".

The value of the remaining hop count is decreased by one at each hop by means of the respective node 12.

Thus, the second node 16 reduces the value of the remaining hop count to four, i.e. the remaining hop count portion 34 of the at least one initial data package associated with the first node 14 and forwarded by the second node 16 comprises the information "remaining hop count = 4".

If the remaining hop count reaches a predefined value, particularly zero, the respective package is not forwarded to any further nodes.

The node-specific maximum transmission distance portion 36 comprises information on a node-specific maximum hop count of data packages received by the first node 14.

As the node-specific maximum hop count of data packages received by the first node 14 has not been determined, yet, the value of the node-specific maximum transmission distance portion 36 may be set to a default value, e.g. to "0" or to "N.N."

The management data portion 38 comprises management data associated with the first node 14.

In general, the management data comprises information that is relevant for configuring the wireless ad hoc network 10.

For example, the management data comprises configuration information and/or location information associated with the first node 14.

The explanations given above relate to the at least one initial data package transmitted by the first node 14.

The other nodes 16, 18, 20, 22 likewise transmit at least one initial data package in their respectively assigned time slots, wherein the explanations given above likewise apply.

The initial data packages are received by means of each node 12 of the plurality of nodes 12 from the remaining nodes 12 of the plurality of nodes 12, respectively (step S2).

Accordingly, the first node 14 receives at least one initial data package from the second node 16, the third node 18, the fourth node 20, and the fifth node 22, respectively.

The second node 16 receives at least one initial data package from the first node 14, the third node 18, the fourth node 20, and the fifth node 22, respectively, etc.

Each node 12 determines a node-specific maximum transmission distance based on the respectively received initial data packages (step S3).

Therein, the node-specific maximum transmission distance corresponds to the maximum number of hops that have been necessary in order to transmit the at least one initial data package to the respective node 12.

In the exemplary topology of the wireless ad hoc network 10 shown in Figure 1, the first node 14 determines the node-specific maximum transmission distance to be equal to 3, as the at least one initial data package transmitted by the fifth node 22 take three hops to reach the first node 14, while the initial data packages transmitted by the other nodes 12 take less hops to reach the first node 14.

Similarly, the second node 16 and the third node 18 determine the node-specific maximum transmission distance to be equal to 2, as the at least one initial data package transmitted by the fifth node 22 take two hops to reach the second node 16 and the third node 18, respectively.

For example, the transmission distances of the respective initial packages may be determined to be the difference between the TTL of the respective data package and the remaining hop count of the respective data package.

The node-specific maximum transmission distance may then be determined by selecting the largest transmission distance.

Each node 12 includes the respective node-specific maximum transmission distance into subsequently transmitted data packages (step S4).

The structure of the subsequently transmitted data packages essentially corresponds to the structure of the initial data packages shown in Figure 4.

Therein, the respective node-specific maximum transmission distance is written into the node-specific maximum transmission distance portion 36.

The subsequently transmitted data packages may be broadcast to all nodes 12.

A global maximum transmission distance is determined by means of the nodes 12, respectively, wherein the global maximum transmission distance is equal to the largest node-specific maximum transmission distance (step S5).

In general, the global maximum transmission distance corresponds to the maximum amount of hops that occur within the entire wireless ad hoc network 10.

The nodes 12 may each compare the different node-specific maximum transmission distances associated with the different nodes 12 in order to determine the global maximum transmission distance, namely by selecting the largest node-specific maximum transmission distance occurring in the wireless ad hoc network 10.

It is also conceivable that each node 12 includes the respectively determined global maximum transmission distance into subsequently transmitted data packages, such that the result for the global maximum transmission distance can be cross-checked between different nodes 12.

The TTL associated with each of the nodes 12 or rather with data packages transmitted by each of the nodes 12 is reduced to the global maximum transmission distance or to the global maximum transmission distance plus one (step S6).

By reducing the TTL to the global maximum transmission distance, it is ensured that each node 12 of the wireless ad hoc network 10 can be reached by any other node 12 of the wireless ad hoc network 10 for the current topology of the wireless ad hoc network 10.

By reducing the TTL to the global maximum transmission distance plus 1, a safety margin is provided, such that all nodes 12 of the wireless ad hoc network 10 can be reached by all other nodes 12 even if a new node connects to the wireless ad hoc network 10.

Of course, other safety margins are also possible. For example, the TTL may be reduced to the global maximum transmission distance plus 2, to the global maximum transmission distance plus 3, etc.

As a result, an optimized configuration of the wireless ad hoc network 10 is obtained that is illustrated in Figure 5.

The TTL of each node 12 has been reduced to three, such that only three hops are allowed for each data package transmitted by any one of the nodes 12.

In the initial configuration of the wireless ad hoc network 10 shown in Figure 3, each node 12 had to wait for four further frames before transmitting another data package in the respectively assigned time slot.

In the optimized configuration of the wireless ad hoc network 10 shown in Figure 5, each node 12 only has to wait for two further frames before transmitting another data package in the respectively assigned time slot.

Accordingly, the frequency with which management data can be exchanged between the nodes 12 is enhanced significantly.

Certain embodiments disclosed herein, particularly the respective module(s) and/or unit(s), utilize circuitry (e.g., one or more circuits) in order to implement standards, protocols, methodologies or technologies disclosed herein, operably couple two or more components, generate information, process information, analyze information, generate signals, encode/decode signals, convert signals, transmit and/or receive signals, control other devices, etc. Circuitry of any type can be used.

In an embodiment, circuitry includes, among other things, one or more computing devices such as a processor (e.g., a microprocessor), a central processing unit (CPU), a digital signal processor (DSP), an application-specific integrated circuit (ASIC), a field-programmable gate array (FPGA), a system on a chip (SoC), or the like, or any combinations thereof, and can include discrete digital or analog circuit elements or electronics, or combinations thereof. In an embodiment, circuitry includes hardware circuit implementations (e.g., implementations in analog circuitry, implementations in digital circuitry, and the like, and combinations thereof).

In an embodiment, circuitry includes combinations of circuits and computer program products having software or firmware instructions stored on one or more computer readable memories that work together to cause a device to perform one or more protocols, methodologies or technologies described herein. In an embodiment, circuitry includes circuits, such as, for example, microprocessors or portions of microprocessor, that require software, firmware, and the like for operation. In an embodiment, circuitry includes one or more processors or portions thereof and accompanying software, firmware, hardware, and the like.

The present application may reference quantities and numbers. Unless specifically stated, such quantities and numbers are not to be considered restrictive, but exemplary of the possible quantities or numbers associated with the present application. Also in this regard, the present application may use the term "plurality" to reference a quantity or number. In this regard, the term "plurality" is meant to be any number that is more than one, for example, two, three, four, five, etc. The terms "about", "approximately", "near" etc., mean plus or minus 5% of the stated value.

## Claims

1. A communication method for a wireless ad hoc network (10), wherein the wireless ad hoc network (10) comprises a plurality of nodes (12), wherein the wireless ad hoc network (10) is a time-slotted barrage relay network, the communication method comprising the following steps:
- transmitting, by means of each node (12) of the plurality of nodes (12), at least one initial data package to each of the remaining nodes (12), respectively;
- receiving, by means of each node (12) of the plurality of nodes (12), the initial data packages from the remaining nodes (12) of the plurality of nodes (12), respectively;
- determining, by means of each node (12) of the plurality of nodes (12), a node-specific maximum transmission distance based on the received initial data packages; and
- including, by means of each node (12) of the plurality of nodes (12), the respective node-specific maximum transmission distance into subsequently transmitted data packages.

2. The communication method of claim 1, wherein a global maximum transmission distance is determined by means of the nodes (12), respectively, wherein the global maximum transmission distance is equal to the largest node-specific maximum transmission distance.

3. The communication method of claim 2, wherein the global maximum transmission distance is determined based on the subsequently transmitted data packages.

4. The communication method according to claim 2 or 3, wherein the global maximum transmission distance is included into subsequently transmitted data packages.

5. The communication method according to any one of claims 2 to 4, wherein a time to live (TTL) of each of the nodes (12) is reduced to the global maximum transmission distance or to the global maximum transmission distance plus one, wherein the TTL corresponds to the maximum allowable number of hops of a package sent by the respective node (12).

6. The communication method according to any one of the preceding claims, wherein the initial data packages comprise a remaining hop count portion (34), respectively, wherein the remaining hop count portion (34) comprises information on a remaining hop count of the respective package, and wherein a value of the remaining hop count is decreased at each hop by means of the respective node (12).

7. The communication method according to any one of the preceding claims, wherein the plurality of nodes (12) is configured to communicate with each other by means of a time division multiple access (TDMA) technique.

8. The communication method of claim 7, wherein TDMA frames comprise time slots that are unambiguously assigned to one of the nodes (12), respectively.

9. The communication method according to any one of the preceding claims, wherein the initial data packages and/or the subsequently transmitted data packages comprise management data associated with the respective node (12).

10. The communication method of claim 9, wherein the management data comprises configuration information and/or location information associated with the respective node (12).

11. A wireless ad hoc network, the wireless ad hoc network (10) comprising a plurality of nodes (12), wherein the wireless ad hoc network (10) is a time-slotted barrage relay network, and wherein the wireless ad hoc network (10) is configured to perform the communication method according to any one of the preceding claims.
